**Europäisches Patentamt**

**European Patent Office**

**Office européen des brevets**

(11) Numéro de publication: **0 027 773**

**A1**

## (12) DEMANDE DE BREVET EUROPEEN

(21) Numéro de dépôt: **80420114.3**

(22) Date de dépôt: **21.10.80**

(51) Int. Cl.³: **F 24 J 3/02**

(30) Priorité: **22.10.79 FR 7926804**

(43) Date de publication de la demande:
**29.04.81 Bulletin 81/17**

(84) Etats Contractants Désignés:
**AT BE CH DE GB IT LI LU NL SE**

(71) Demandeur: **PHENOL ENGINEERING Société à
Responsabilité Limitée dite:
Avenue De Lattre de Tassigny Zone Industrielle
F-69330 Meyzieu(FR)**

(72) Inventeur: **Ivorra, Claude
5, rue des Frères Goncourt
69330, Meyzieu(FR)**

(74) Mandataire: **Maureau, Pierre
Cabinet GERMAIN & MAUREAU Le Britannia - Tour C 20,
Boulevard E. Déruelle
F-69003 Lyon(FR)**

(54) **Capteur solaire.**

(57) Ce capteur solaire est du type constitué par un absorbeur plan (1) emprisonné entre un fond isolant au rayonnement (2) et un couvercle transparent (3). Le fond et le couvercle, de préférence en forme de cloche, sont assemblés de façon étanche, et le vide est créé dans les chambres (4) et (5) ménagées entre le fond et l'absorbeur et entre le couvercle et l'absorbeur. Des moyens (7) et (8) sont prévus pour permettre au couvercle et au fond de résister à la pression atmosphérique; il peut s'agir d'arceaux prenant appui les uns sur les autres, à travers des oeillets (6) de l'absorbeur. Ce capteur s'applique à la production d'eau chaude.

FIG.1

EP 0 027 773 A1

La présente invention a pour objet un capteur solaire, du type constitué par un absorbeur plan emprisonné entre un fond pouvant être isolant au rayonnement et un couvercle transparent, essentiellement destiné à la production d'eau chaude, l'absorbeur étant dans ce but relié à une installation d'utilisation de l'eau chauffée dans le capteur.

La production d'eau chaude au moyen de capteurs solaires est actuellement obtenue par deux procédés distincts. Une première solution consiste en l'utilisation de capteurs plans, avec un absorbeur de forme rectangulaire, une partie avant transparente et une partie arrière comprenant un bloc isolant conformé en coffre ou en panneau, et dans ce cas le capteur comprend un joint périphérique jouant un double rôle d'assemblage et d'étanchéité . Une seconde solution actuelle consiste à réaliser le capteur par la juxtaposition de tubes à vide,du genre "tube radio " ou " tube d'éclairage ",contenant un tuyau à ailettes jouant le rôle d'absorbeur. Chacune de ces deux catégories de capteurs solaires a ses avantages et ses inconvénients. L'avantage des capteurs à vide réside dans le fait qu'il n'y a pas besoin d'isolation,mais a en revanche pour inconvénient la juxtaposition de tubes sur un collecteur qui rend l'ensemble fragile. Les capteurs avec partie avant transparente et partie arrière isolante sont avantageux du point de vue de la résistance mécanique,mais ils sont le siège de déperditions de chaleur dues à la présence d'air à l'intérieur qui entraîne toujours une condensation et une convection faisant perdre du rendement à l'appareil.

La présente invention vise à éliminer les inconvénients des deux catégories de capteurs solaires rappelées ci-dessus,tout en conservant leurs avantages, et son but est donc de fournir un capteur solaire alliant résistance mécanique et performances thermiques élevées, ceci en restant dans les normes dimensionnelles actuellement définies.

A cet effet, l'invention a essentiellement pour objet un capteur solaire du type indiqué en introduction, c'est-à-dire constitué par un absorbeur plan emprisonné entre un fond pouvant être isolant au rayonnement et un couvercle transparent, dans lequel :

- le fond et le couvercle sont assemblés de façon étanche,
- dans chaque chambre ménagée entre le fond et l'absorbeur et entre le couvercle et l'absorbeur, est créé le vide, et
- des moyens sont prévus pour permettre au couvercle et au fond de résister à la pression atmosphérique.

L'objet principal de l'invention réside donc dans le fait d'opposer un fond et un couvercle, de part et d'autre de l'absorbeur, en réalisant l'étanchéité de manière à obtenir un capteur à vide, et en prévoyant des moyens donnant une résistance à la poussée extérieure due à la mise sous vide de l'enceinte ainsi constituée par le fond et le couvercle, donc évitant une réalisation trop fragile. Il convient, en outre, de réaliser ces moyens de manière à éviter de créer des ponts thermiques, donc en évitant les contacts ou appuis entre le fond ou le couvercle et l'absorbeur, ou encore en admettant éventuellement les appuis mais en choisissant des matériaux mauvais conducteurs de la chaleur, ce qui peut donner lieu à divers modes de réalisation du capteur solaire objet de l'invention. Diverses possibilités se présentent aussi pour l'assemblage étanche du fond et du couvercle entre eux, en liaison avec la forme de ces éléments.

Selon une première forme de réalisation, le fond et le couvercle sont en matériau moulable en forme et sont en forme de cloche, l'absorbeur étant maintenu dans le vide au moyen des canalisations d'amenée et de départ du fluide à chauffer, traversant le fond. Le couvercle et le fond, ici en forme de cloche ou de coque, sont réalisés respectivement en verre ou autre matière transparente et en métal, imperméables à l'air. Le fond peut être en verre recouvert d'un revêtement réfléchissant, pour l'obtention de l'isolation au rayonnement.

Selon une deuxième forme de réalisation, le fond et le couvercle sont plans et sont assemblés à une entretoise continue épousant le périmètre de l'absorbeur et permettant la tenue du vide.

Suivant une première forme d'exécution relative aux moyens permettant de résister à la pression, d'une part, l'absorbeur est du type à oeillets et, d'autre part, il est prévu, de part et d'autre de l'absorbeur, des arceaux dont chacun prend appui sur l'arceau correspondant de l'autre face, à travers deux oeillets de l'absorbeur, chaque arceau étant dimensionné de manière à permettre un appui mécanique du couvercle ou du fond selon qu'il se trouve du côté de la face supérieure de l'absorbeur ou de l'autre. Selon un procédé de fabrication avantageux, les arceaux situés de chaque côté de l'absorbeur sont obtenus directement de moulage avec l'élément en forme de cloche correspondant, fond ou couvercle, celui-ci présentant, sur sa face interne, des saillies en correspondance de tout ou partie des oeillets de l'absorbeur, chaque saillie de l'un des éléments étant apte à prendre appui, à travers un oeillet, contre la saillie correspondante de l'autre élément.

Une autre solution, applicable pour l'obtention de la résistance mécanique dans le cas où le fond et le couvercle sont plans, est de prévoir que, d'une part, l'absorbeur est du type à tétons et que, d'autre part, l'entretoise par laquelle sont assemblés le fond et le couvercle a une hauteur sensiblement égale au double de celle d'un téton, augmentée de l'épaisseur de l'absorbeur. De préférence, chaque téton est réalisé en matière mauvaise conductrice de la chaleur, tel qu'en matière plastique.

En variante, dans le cas où le fond et le couvercle sont en forme de cloche, les moyens pour permettre au fond et au couvercle de résister à la pression atmosphérique peuvent être constitués par des membrures obtenues directement de moulage avec chaque élément en forme de cloche.

4

De toute façon, l'invention sera mieux comprise à l'aide de la description qui suit, en référence au dessin schématique annexé représentant, à titre d'exemples non limitatifs, quelques formes d'exécution de ce capteur solaire :

Figure 1 est une vue en perspective, avec coupe, d'un capteur conforme à l'invention dont le fond et le couvercle sont en forme de cloche;

Figure 2 est une vue en perspective, avec coupe, d'un autre capteur conforme à l'invention dont le fond et le couvercle sont aussi en forme de cloche;

Figure 3 est une vue en perspective, avec coupe, d'un capteur conforme à l'invention avec fond et couvercle plans.

De manière connue, et dans les trois formes d'exécution représentées, le capteur se compose d'un absorbeur plan $\underline{1}$, d'un fond isolant au rayonnement $\underline{2}$ et d'un couvercle transparent $\underline{3}$, l'absorbeur $\underline{1}$ étant disposé entre le fond $\underline{2}$ et le couvercle $\underline{3}$, de sorte que deux chambres $\underline{4}$ et $\underline{5}$ sont ménagées, respectivement, entre le fond $\underline{2}$ et l'absorbeur $\underline{1}$ d'une part, et entre le couvercle $\underline{3}$ et l'absorbeur $\underline{1}$ d'autre part. Des canalisations assurent l'amenée du liquide à chauffer à l'absorbeur $\underline{1}$, et le départ du liquide chauffé.

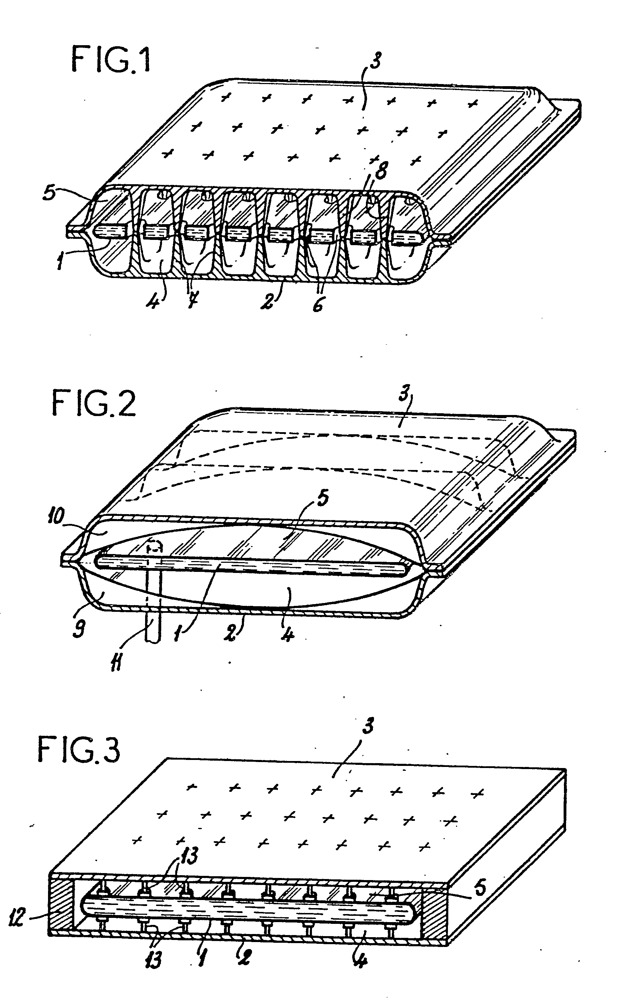

Dans les formes d'exécution selon les figures 1 et 2, le fond $\underline{2}$ et le couvercle $\underline{3}$ sont en forme de cloche, leurs bords se rejoignant mais ne venant pas en contact avec la périphérie de l'absorbeur $\underline{1}$. L'assemblage est réalisé de façon étanche, par exemple par fusion localisée soudant les bords du fond $\underline{2}$ avec ceux du couvercle $\underline{3}$, et les deux chambres $\underline{4}$ et $\underline{5}$ précitées se trouvent ainsi maintenues sous vide.

Dans le cas de la figure 1, l'absorbeur $\underline{1}$ comporte des oeillets $\underline{6}$, formant un réseau tel qu'un quadrillage, et la résistance mécanique du capteur est assurée par des saillies $\underline{7}$ et $\underline{8}$ prévues sur les faces internes du fond $\underline{2}$ et du couvercle $\underline{3}$ en forme de cloche. La disposition de ces saillies 7 et 8 correspond à celle des oeillets 6, et la hauteur de ces saillies est telle que chaque saillie 7 du fond 2 prend appui, en passant à travers un oeillet 6, contre la saillie correspondante 8 du couvercle 3. Les saillies 7 et 8 réalisent des arceaux qui permettent de créer des entretoises sans venir en contact avec l'absorbeur 1, grâce aux oeillets 6 de ce dernier, donc sans avoir des ponts thermiques nuisibles au rendement.

Une technique économique de fabrication du capteur solaire représenté sur la figure 1 consiste à réaliser le fond 2 et le couvercle 3 par moulage, les saillies respectives 7 et 8 venant aussi directement de moulage.

Dans le cas de la figure 2, l'absorbeur 1 possède une surface continue et les deux cloches, constituant le fond 2 et le couvercle 3, comportent intérieurement des membrures, respectivement 9 et 10, qui leur permettent de résister à la pression atmosphérique s'exerçant sur les faces extérieures. Ici également, les membrures 9 et 10 peuvent venir directement de moulage avec l'élément en forme de cloche respectif 2 ou 3. Comme le montre encore la figure 2, l'absorbeur 1 est maintenu dans le vide, à mi-hauteur entre le fond 2 et le couvercle 3, au moyen des canalisations 11 d'amenée et de départ du fluide. Ces canalisations traversent le fond 2, l'étanchéité de la traversée étant obtenue par des techniques bien connues.

Dans la forme d'exécution selon la figure 3, le fond 2 et le couvercle 3 sont au contraire de forme plane, et disposés parallèlement, de part et d'autre de l'absorbeur 1. Le fond 2 et le couvercle 3 ont ici leurs bords réunis par une entretoise continue 12 épousant le périmètre de l'absorbeur 1, l'assemblage étant réalisé de façon étanche. L'absorbeur 1 comporte, sur ses deux faces tournées respectivement vers le fond 2 et le couvercle 3, des tétons 13 dont la hauteur est sensiblement égale à la moitié de celle de l'entretoise périphérique 12. Ces tétons 13 qui s'étendent dans les chambres 4 et

6

forment un réseau, tel qu'un quadrillage, et constituent un ensemble d'entretoises intérieures assurant la résistance à la pression.

Le capteur solaire objet de l'invention s'applique, plus particulièrement, à la production d'eau chaude et, notamment, d'eau chaude sanitaire, réalisant ainsi un " chauffe-eau solaire".

Comme il va de soi, l'invention ne se limite pas aux seules formes d'exécution de ce capteur solaire qui ont été décrites ci-dessus, à titre d'exemples;elle en embrasse, au contraire, toutes les variantes de réalisation et d'application comportant des moyens équivalents, ou dans lesquelles les diverses caractéristiques décrites sont combinées différemment. C'est ainsi,par exemple,que l'utilisation d'entretoises en forme de tétons,comme illustré par la figure 3, pourrait être aussi envisagée pour des capteurs dont le fond et le couvercle sont en forme de cloches.

—REVENDICATIONS—

1.- Capteur solaire du type constitué par un absorbeur plan emprisonné entre un fond pouvant être isolant au rayonnement et un couvercle transparent, caractérisé en ce que le fond (2) et le couvercle (3) sont assemblés de façon étanche, en ce que dans chaque chambre (4,5) ménagée entre le fond (2) et l'absorbeur (1) et entre le couvercle (3) et l'absorbeur (1), est créé le vide et en ce que des moyens ( 7,8;9,10;13) sont prévus pour permettre au couvercle (3) et au fond (2) de résister à la pression atmosphérique.

2.- Capteur solaire selon la revendication 1, caractérisé en ce que le fond (2) et le couvercle (3) sont en matériau moulable en forme et sont en forme de cloche, l'absorbeur (1) étant maintenu dans le vide au moyen des canalisations (11) d'amenée et de départ du fluide à chauffer, traversant le fond (2).

3.- Capteur solaire selon la revendication 2, caractérisé en ce que le couvercle (3) et le fond (2) sont réalisés respectivement en verre ou autre matière transparente et en métal, imperméables à l'air.

4.- Capteur solaire selon la revendication 1, caractérisé en ce que le fond (2) et le couvercle (3) sont plans et sont assemblés à une entretoise continue (12) épousant le périmètre de l'absorbeur (1) et permettant la tenue du vide.

5.- Capteur solaire selon l'ensemble des revendications 1 à 3 ou selon les revendications 1 et 4, caractérisé en ce que, d'une part, l'absorbeur (1) est du type à oeillets(6)et, d'autre part, il est prévu, de part et d'autre de l'absorbeur (1), des arceaux (7,8) dont chacun prend appui sur l'arceau correspondant de l'autre face, à travers deux oeillets (6) de l'absorbeur, chaque arceau (7,8) étant dimensionné de manière à permettre un appui mécanique du couvercle (3) ou du fond (2)selon qu'il se trouve du côté de la face supérieure de l'absorbeur (1) ou de l'autre.

8

6.-Capteur solaire selon l'ensemble des revendications 2 et 5, caractérisé en ce que les arceaux correspondant à l'une des faces de l'absorbeur (1) sont obtenus directement de moulage avec l'élément en forme de cloche correspondant, fond (2) ou couvercle (3), celui-ci présentant, sur sa face interne, des saillies (7,8) en correspondance de tout ou partie des oeillets (6) de l'absorbeur (1), chaque saillie de l'un des éléments (2,3) étant apte à prendre appui, à travers un oeillet (6), contre la saillie correspondante de l'autre élément.

7.- Capteur solaire selon l'ensemble des revendications 1 et 4, caractérisé en ce que, d'une part,l'absorbeur (1) est du type à tétons (13) et en ce que,d'autre part, l'entretoise (12) par laquelle sont assemblés le fond (2) et le couvercle (3) a une hauteur sensiblement égale au double de celle d'un téton (13) augmentée de l'épaisseur de l'absorbeur (1).

8.- Capteur solaire selon la revendication 7, caractérisé en ce que chaque téton (13) est réalisé en matière mauvaise conductrice de la chaleur, tel qu'en matière plastique.

9.- Capteur solaire selon la revendication 2 ou 3, caractérisé en ce que les moyens pour permettre au fond (2) et au couvercle (3) de résister à la pression atmosphérique sont constitués par des membrures (9,10) obtenues directement de moulage avec l'élément (2,3) en forme de cloche considéré.

FIG.1

FIG.2

FIG.3

Office européen
des brevets

**RAPPORT DE RECHERCHE EUROPEENNE**

Numéro de la demande

EP 80 42 0114

| | **DOCUMENTS CONSIDERES COMME PERTINENTS** | | **CLASSEMENT DE LA DEMANDE (Int. Cl. 3)** |
|---|---|---|---|
| Catégorie | Citation du document avec indication, en cas de besoin, des parties pertinentes | Revendication concernée | |
| X | US - A - 3 961 619 (ESTES)<br><br>* colonne 1, lignes 65-68; colonne 2, lignes 1-3; colonne 3, lignes 62-68; colonne 4, en entier; colonne 5, en entier; figures 4,5,6,7 *<br><br>-- | 1-6 | F 24 J 3/02 |
| | FR - A - 2 357 833 (C.E.A.)<br><br>* page 3, lignes 17-40; page 4, en entier; figure 1 *<br><br>-- | 1 | |
| | US - A - 4 147 155 (KRAFT)<br><br>* colonne 3, lignes 10-57; figure 3 *<br><br>-- | 1 | **DOMAINES TECHNIQUES RECHERCHES (Int. Cl. 3)**<br><br>F 24 J |
| A | FR - A - 2 385 057 (ROTHWERKE)<br><br>* en entier *<br><br>-- | 1 | |
| A | US - A - 4 062 352 (LESK)<br><br>* en entier *<br><br>------ | 1 | |

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

| | Le present rapport de recherche a été établi pour toutes les revendications |
|---|---|

| Lieu de la recherche | Date d'achevement de la recherche | Examinateur |
|---|---|---|
| La Haye | 27-01-1981 | PERROTTA |

OEB Form 1503.1  06.78